# EUROPEAN PATENT APPLICATION

(11) **EP 4 685 985 A1**
(43) Date of publication of application: **28.01.2026**
(21) Application number: 25776693.1
(22) Date of filing: 21.02.2025
(51) Int. Cl.: H01M 50/531, H01M 50/536

(54) **SECONDARY BATTERY AND METHOD FOR MANUFACTURING SAME**

(30) Priority: 29.03.2024 KR 20240042963
(71) Applicant: LG Energy Solution, Ltd., Seoul 07335 (KR)
(72) Inventor: PYO, Jung Ho, Daejeon 34122 (KR); KIM, Ki Woong, Daejeon 34122 (KR); KIM, In Jung, Daejeon 34122 (KR); KIM, Seung Cheol, Daejeon 34122 (KR); BIN, Seung Seok, Daejeon 34122 (KR)
(74) Representative: BCKIP Part mbB
(86) International application number: PCT/KR2025/002511
(87) International publication number: WO 2025/206592

(57) **Abstract**

A secondary battery according to some embodiments may include an electrode assembly including an electrode tab bundle on one side; an electrode lead welded to the electrode tab bundle at a welding part; and an adhesive layer positioned between the electrode tab bundle and the electrode lead and positioned under a front edge of the electrode lead. The secondary battery according to some embodiments can prevent degradation of secondary battery performance by preventing the electrode tab bundle from being torn.

## Description

### [Technical Field]

This application claims the benefit of priority from Korean Patent Application No. 10-2024-0042963, filed on March 29, 2024, the entire contents disclosed therein are incorporated by reference into this disclosure.

The present disclosure relates to a secondary battery and a manufacturing method thereof.

### [Background]

Recently, interest in secondary batteries that can be used repeatedly for long periods through recharging has been increasing in order to reduce carbon emissions while reducing dependence on fossil fuels. In particular, among secondary batteries, lithium secondary batteries are secondary batteries, which use lithium ions as ions, have been actively researched and developed due to their excellent energy density and lifespan. Accordingly, lithium secondary batteries are used in various fields such as portable electronic devices, vehicles, ESS, etc.

Lithium secondary batteries are classified into cylindrical, prismatic, and pouch types according to the shape of the battery case. Pouch-type lithium secondary batteries use a film as the battery case, which simplifies the assembly process and has better heat dissipation capacity, lifespan performance, and energy density than cylindrical and prismatic batteries that use a can as the battery case. In addition, pouch-type lithium secondary batteries have advantages in market penetration because the designs of small batteries and medium and large-sized batteries are almost similar. Accordingly, there has been a lot of development in pouch-type lithium secondary batteries.

Pouch-type lithium secondary batteries generally include an electrode assembly having a plurality of positive electrodes, a plurality of negative electrodes, and a plurality of separators stacked inside a film. In this case, on one side of the electrode assembly, an electrode tab bundle having a plurality of electrode tabs welded thereto is positioned. The electrode tab bundle is welded to an electrode lead and is electrically connected to the electrode lead. However, when the electrode leads are manufactured in a process such as notching a mold, etc., a burr is formed on one side. Conventionally, operators visually confirm which of the two sides of the electrode lead does not have a burr, and insert the electrode lead so that the corresponding side is in contact with the electrode tab bundle.

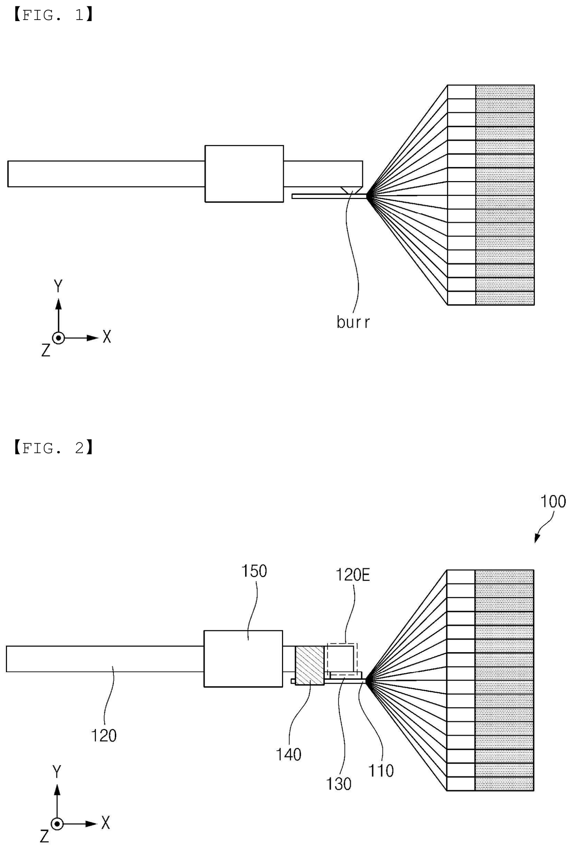

However, when operators make a mistake, the burr of the electrode lead comes into contact with the electrode tab bundle as shown in FIG. 1. Therefore, conventionally, there is a risk that the electrode tab bundle may be torn due to the operator's mistake. When a secondary battery was manufactured with the electrode tab bundle torn, the performance of the secondary battery was inevitably degraded.

### [Summary]

### [Technical Problem]

A technical problem to be solved by the present disclosure is to provide a secondary battery in which performance is not degraded because the electrode tab bundle is not torn. Another technical problem to be solved by the present disclosure is to provide a manufacturing method of a secondary battery that can prevent the electrode tab bundle from being torn.

### [Technical Solution]

Some embodiments of the present disclosure that can solve the above problems are described below.

A secondary battery according to some embodiments may include an electrode assembly including an electrode tab bundle on one side; an electrode lead welded to the electrode tab bundle at a welding part; and an adhesive layer positioned between the electrode tab bundle and the electrode lead and positioned under a front edge of the electrode lead.

In some embodiments, a distance from the adhesive layer to a plurality of electrodes included in the electrode assembly may be shorter than a distance from a welding part to the plurality of electrodes included in the electrode assembly.

In some embodiments, the adhesive layer may be separated from the welding part.

In some embodiments, the adhesive layer may be non-conductive.

In some embodiments, the adhesive layer may have a portion that does not overlap with the electrode lead in a direction parallel to a thickness direction of the electrode lead.

A manufacturing method of a secondary battery according to some embodiments includes a first step of providing an electrode assembly including an electrode tab bundle on one side; a second step of applying an adhesive layer to the electrode tab bundle; and a third step of welding the electrode tab bundle with an electrode lead, wherein the second step is performed prior to the third step, and wherein in the second step, the adhesive layer may be applied such that it is positioned under the front edge of the electrode lead welded in the third step.

In some embodiments, in the second step, the adhesive layer may be applied such that a distance from the adhesive layer to a plurality of electrodes included in the electrode assembly is shorter than a distance from a welding part formed by welding in the third step to the plurality of electrodes included in the electrode assembly.

In some embodiments, in the third step, the welding may not be performed on the adhesive layer.

In some embodiments, the adhesive layer in the second step may be non-conductive.

In some embodiments, in the second step, the adhesive layer may be applied such that there is a portion that does not overlap with the electrode lead welded in the third step in a direction parallel to a thickness direction of the electrode lead.

In some embodiments, the welding in the third step may be one or more of laser welding, resistance welding, and ultrasonic welding.

### [Advantageous Effects]

Some embodiments of the present disclosure can prevent degradation of secondary battery performance by preventing the electrode tab bundle from being torn. Some embodiments of the present disclosure can prevent the electrode tab bundle from being torn and can prevent the position of the electrode lead from being changed prior to welding of the electrode tab bundle and the electrode lead.

The effects of embodiments of the present disclosure are not limited to the above-described effects, and other effects not mentioned can be clearly derived and understood by a person skilled in the art from the description described below. In other words, unintended effects of implementing the embodiments of the present disclosure may also be derived and understood by a person skilled in the art to which the embodiments of the present disclosure belong.

### [Brief Description of the Drawings]

FIG. 1 is a diagram for explaining a conventional problem.
FIG. 2 is a schematic side view for explaining some embodiments.
FIG. 3 is a schematic top view for explaining some embodiments.

### [Detailed Description]

Terms and words used in the present specification should not be construed as limited to conventional or dictionary meanings and should be interpreted with the meaning and concept in accordance with the technical idea of the present disclosure based on the principle that the inventors can appropriately define the meanings of terms or words in order to explain the invention in the best way.

In this specification, terms such as "include," "comprise," or "have" should be understood to specify the presence of features, numbers, steps, operations, components, or combinations thereof described in the specification, and should be understood as not precluding the presence or possibility of addition of one or more other features, numbers, steps, operations, components, or combinations thereof. In addition, when a part of a layer, film, region, plate, or the like is disposed "on" another part, this includes not only a case in which one part is disposed "directly on" another part, but also a case in which still another part is interposed therebetween. In contrast, when a part of a layer, film, region, plate, or the like is disposed "under" another part, this includes not only a case in which one part is disposed "directly under" another part, but a case in which still another part is interposed therebetween.

It should be understood that the embodiments and drawings are merely examples of the present disclosure and do not represent all of the technical spirit of the present disclosure, and that there may be various equivalents and modifications that can replace them.

When it is determined that detailed descriptions of known configurations or functions may obscure the gist of the present disclosure in describing the present disclosure, the detailed descriptions thereof are omitted.

Since the drawings are provided to more completely explain the present disclosure to a person skilled in the art, shapes, sizes, and numbers of components in the drawings may be exaggerated, omitted, or schematically illustrated for clearer explanation. The shape, size, proportion, and number of each component in the drawings do not entirely reflect the actual shape, size, proportion, and number of each component.

Hereinafter, embodiments of the present disclosure will be described in detail with reference to the drawings.

One aspect of the present disclosure relates to a secondary battery.

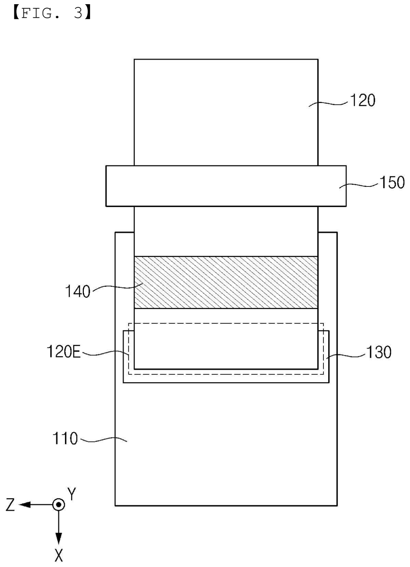

FIG. 2 is a schematic side view for explaining some embodiments. FIG. 3 is a schematic top view for explaining some embodiments.

In the present specification, a direction substantially parallel to a length direction of the electrode lead 120 is defined as an X direction, a direction substantially parallel to a thickness direction of the electrode lead 120 is defined as a Y direction, and a direction substantially parallel to a width direction of the electrode lead 120 is defined as a Z direction.

The electrode assembly 100 includes an electrode tab bundle 110 on one side. The electrode tab bundle 110 may be formed by ultrasonic welding, laser welding, or resistance welding of a plurality of electrode tabs. In some embodiments, the electrode assembly 100 may be formed by stacking a plurality of positive electrodes and a plurality of negative electrodes with separators interposed therebetween.

The electrode tab bundle 110 may be a positive electrode tab bundle and/or a negative electrode tab bundle. In some embodiments, the electrode assembly 100 may include a positive electrode tab bundle on one side and a negative electrode tab bundle on the other side. In some embodiments, the electrode assembly 100 may include a positive electrode tab bundle and a negative electrode tab bundle on one side, wherein the positive electrode tab bundle and the negative electrode tab bundle may be spaced apart from each other. As a non-limiting example, the positive electrode tab bundle may be an aluminum tab bundle. As a non-limiting example, the negative electrode tab bundle may be a copper tab bundle.

The electrode tab bundle 110 is welded with the electrode lead 120. The electrode tab bundle 110 and the electrode lead 120 are melted during welding and then cooled to form a welding part 140. The welding part 140 electrically connects the electrode tab bundle 110 and the electrode lead 120.

The electrode lead 120 may be a positive electrode lead and/or a negative electrode lead. As a non-limiting example, the positive electrode lead may be an aluminum lead or a nickel lead. As a non-limiting example, the negative electrode lead may be a copper lead or a nickel lead. In some embodiments, the electrode lead 120 may be surrounded by an insulating tape 150. The insulating tape 150 can insulate the electrode lead 120 from the battery case while maintaining the sealing of the battery case as it is thermally fused with the battery case when the electrode assembly 100 is accommodated inside the battery case and the battery case is sealed.

The adhesive layer 130 is positioned between the electrode tab bundle 110 and the electrode lead 120 and is positioned under a front edge 120E of the electrode lead 120. The adhesive layer 130 prevents the electrode tab bundle 110 from being torn by burrs of the electrode lead 120 even when an operator fails to notice the burrs of the electrode lead 120 and the burrs of the electrode lead 120 come into contact with the electrode tab bundle 110. Accordingly, degradation of secondary battery performance can be prevented. In most cases, burrs of the electrode lead 120 are formed at the front edge 120E of the electrode lead 120. Therefore, it may be preferable for the adhesive layer 130 to be positioned under the front edge 120E of the electrode lead 120.

In some embodiments, a distance from the adhesive layer 130 to the plurality of electrodes included in the electrode assembly 100 may be shorter than a distance from the welding part 140 to the plurality of electrodes included in the electrode assembly 100. As described above, since burrs of the electrode lead 120 are formed in a region proximate to the plurality of electrodes included in the electrode assembly 100, it may be preferable for the distance from the adhesive layer 130 to the plurality of electrodes included in the electrode assembly 100 to be shorter than the distance from the welding part 140 to the plurality of electrodes included in the electrode assembly 100.

In some embodiments, the adhesive layer 130 may be non-conductive. As such, if the adhesive layer 130 is non-conductive, it may be preferable for the adhesive layer 130 to be separated from the welding part 140. This is because if the non-conductive adhesive layer 130 overlaps with the welding part 140, the electrical connection between the electrode lead 120 and the electrode tab bundle 110 may become defective.

In some embodiments, the adhesive layer 130 may include one or more of: cyanoacrylate-based instant adhesives; hot-melt adhesives such as ethylene vinyl acetate-based, polyolefin-based, styrene block copolymer-based, polyamide-based, polyester-based, and urethane-based adhesives; and pressure-sensitive adhesives such as acrylic resin, butyl rubber, and vinyl acetate.

The thickness of the adhesive layer 130 is sufficient to cover burrs. In some embodiments, the thickness of the adhesive layer 130 may be in a range of about 350 µm to about 500 µm.

In some embodiments, the adhesive layer 130 may have a portion that does not overlap with the electrode lead 120 in the Y direction. Burrs of the electrode lead 120 may be formed so as not to overlap with the entire electrode lead 120 in the Y direction. Therefore, it may be preferable for the adhesive layer 130 to have a portion that does not overlap with the electrode lead 120 in the Y direction.

Another aspect of the present disclosure relates to a manufacturing method of a secondary battery.

In some embodiments, the manufacturing method of a secondary battery includes a first step of providing an electrode assembly 100 including an electrode tab bundle 110 on one side; a second step of applying an adhesive layer 130 to the electrode tab bundle 110; and a third step of welding the electrode tab bundle 110 to an electrode lead 120, wherein the second step may be performed prior to the third step, and in the second step, the adhesive layer 130 may be applied to be positioned under a front edge 120E of the electrode lead 120 welded in the third step. Since the electrode tab bundle 110 is welded to the electrode lead 120 after applying the adhesive layer 130 to the electrode tab bundle 110, the electrode tab bundle 110 can be prevented from being torn by burrs of the electrode lead 120 even when an operator fails to notice the burrs of the electrode lead 120 and the burrs of the electrode lead 120 come into contact with the electrode tab bundle 110. In addition, since the electrode lead 120 is adhered to the electrode tab bundle 110 through the adhesive layer 130 before the electrode tab bundle 110 is welded to the electrode lead 120, the position of the electrode lead can be prevented from being changed, so that welding of the electrode tab bundle 110 and the electrode lead 120 can be performed more precisely. As described above, in most cases, burrs of the electrode lead 120 are formed at the front edge 120E of the electrode lead 120. Therefore, it may be preferable to apply the adhesive layer 130 to be positioned under the front edge 120E of the electrode lead 120 welded in the third step in the second step.

In some embodiments, in the second step, the adhesive layer 130 may be applied such that a distance from the adhesive layer 130 to a plurality of electrodes included in the electrode assembly 100 is shorter than a distance from a welding part 140 formed by welding in the third step to the plurality of electrodes included in the electrode assembly 100. As described above, since burrs of the electrode lead 120 are formed in a region proximate to the plurality of electrodes included in the electrode assembly 100, it may be preferable to apply the adhesive layer 130 in the second step such that the distance from the adhesive layer 130 to the plurality of electrodes included in the electrode assembly 100 is shorter than the distance from the welding part 140 formed by welding in the third step to the plurality of electrodes included in the electrode assembly 100.

In some embodiments, in the second step, the adhesive layer 130 may be applied such that there is a portion that does not overlap with the electrode lead 120 welded in the third step in the Y direction. As described above, burrs of the electrode lead 120 may be formed so as not to overlap with the entire electrode lead 120 in the Y direction. Therefore, it may be preferable to apply the adhesive layer 130 in the second step such that there is a portion that does not overlap with the electrode lead 120 welded in the third step in the Y direction.

In some embodiments, in the third step, welding may not be performed on the adhesive layer 130. As described above, if the adhesive layer 130 is non-conductive, it may be preferable not to perform welding on the adhesive layer 130 in the third step for proper electrical connection between the electrode lead 120 and the electrode tab bundle 110.

In some embodiments, in the third step, the welding may be one or more of laser welding, resistance welding, and ultrasonic welding. As a non-limiting example, the ultrasonic welding may be performed by scanning ultrasonic waves of less than 20 KHz, 15 KHz or less, or 10 KHz or less. As a non-limiting example, the laser welding may be performed with an energy density of 10⁷ W/cm² or less.

The foregoing description is merely illustrative of the present disclosure. The scope of the present disclosure should be interpreted according to the claims, and all technical concepts within an equivalent or equal scope thereof should be construed as being included within the scope of the present disclosure.

### [Description of Reference Numerals]

- 100:: electrode assembly
- 110:: electrode tab bundle
- 120:: electrode lead
- 120E:: front edge of electrode lead
- 130:: adhesive layer
- 140:: welding part
- 150:: insulating tape

## Claims

1. A secondary battery, comprising:
an electrode assembly comprising an electrode tab bundle on one side;
an electrode lead welded to the electrode tab bundle at a welding part; and
an adhesive layer positioned between the electrode tab bundle and the electrode lead and positioned under a front edge of the electrode lead.

2. The secondary battery of claim 1, wherein a distance from the adhesive layer to a plurality of electrodes included in the electrode assembly is shorter than a distance from the welding part to the plurality of electrodes included in the electrode assembly.

3. The secondary battery of claim 1, wherein the adhesive layer is separated from the welding part.

4. The secondary battery of claim 1, wherein the adhesive layer is non-conductive.

5. The secondary battery of claim 1, wherein the adhesive layer has a portion that does not overlap with the electrode lead in a direction parallel to a thickness direction of the electrode lead.

6. A manufacturing method of a secondary battery, comprising:
a first step of providing an electrode assembly comprising an electrode tab bundle on one side;
a second step of applying an adhesive layer to the electrode tab bundle; and
a third step of welding the electrode tab bundle with an electrode lead,
wherein the second step is performed prior to the third step, and
wherein in the second step, the adhesive layer is applied such that it is positioned under a front edge of the electrode lead welded in the third step.

7. The manufacturing method of the secondary battery of claim 6, wherein in the second step, the adhesive layer is applied such that a distance from the adhesive layer to a plurality of electrodes included in the electrode assembly is shorter than a distance from a welding part formed by welding in the third step to the plurality of electrodes included in the electrode assembly.

8. The manufacturing method of the secondary battery of claim 6, wherein in the third step, the welding is not performed on the adhesive layer.

9. The manufacturing method of the secondary battery of claim 6, wherein the adhesive layer in the second step is non-conductive.

10. The manufacturing method of the secondary battery of claim 6, wherein in the second step, the adhesive layer is applied such that there is a portion that does not overlap with the electrode lead welded in the third step in a direction parallel to a thickness direction of the electrode lead.

11. The manufacturing method of the secondary battery of claim 6, wherein the welding in the third step is one or more of laser welding, resistance welding, and ultrasonic welding.
